# EUROPEAN PATENT APPLICATION

(11) **EP 1 016 569 A2**
(43) Date of publication of application: **05.07.2000**
(21) Application number: 99850215.7
(22) Date of filing: 27.12.1999
(51) Int. Cl.: B60R 25/00, B66F 9/00

(54) **Keyboard for truck**

(30) Priority: 30.12.1998 SE 9804595
(71) Applicant: BT Industries Aktiebolag, S-59581 Mjölby (SE)
(72) Inventor: Précenth, Gert, 59553 Mjölby (SE); Stenberg, Kurt-Ove, 595 44 Mjölby (SE)
(74) Representative: Berglund, Erik Wilhelm

(57) **Abstract**

On the bottom side of the handle of a tiller truck a key board (14) is arranged for authority verification and starting and stopping of the truck instead of with a key. The key board is connected to a circuit card in the handle and arranged on the bottom side of bottom part of the housing of a control panel (5). The chassis (1) of the handle is here provided with a corresponding recess so that the keys may be actuated. In this way the keyboard is recessed in the same time and well protected by the sturdy chassis. The key board includes figure keys and a green key for start and a red key for turning off.

## Description

In order to make it possible with authority verification at tiller trucks it is desirable with a keyboard where the user can enter a pin code. This may of course be arranged on the top of the machine, but will then have an exposed position were it may easily be damaged. On machines with few functions and thus controls one could consider to place the key board on the upper side of the handle, but on machines with many functions this is not possible since the controls take all available space. Since one further wishes to have as few base versions of the handle as possible this is not realistic and furthermore the interest in authority verification is the greatest at the machines that have many functions and thereby the possibility of making mistakes increases at the same time as the location area lessens.

The object of the invention is to solve the above problem so that an easily accessible key board for authority verification is obtained. This object is solved by arranging the key board on the bottom side of the handle. Normally no competing controls or anything else exist here that can prevent the arranging of the keyboard. At the first look this location may seem entirely unsuitable and unfriendly for the user, but since the keyboard is only used initially before a period of use and not during use and in particular since the tiller when the machine is unused is spring pretensioned towards an upright position, the keyboard will before the machine is to be used have the keyboard facing the user and this even in an easily manageable height level.

The arranging of the key board on the bottom side of the handle further brings the advantage that it will be far more protected than if it is on the machine on the upper side of the handle. On the upper side falling goods or cradles can damage the keyboard that may be considerably more sensitive than the other controls.

The tiller of the truck is in its resting position due to the spring pretension straight up with the bottom side of the handle turned towards the operator and sufficiently high up to be comfortable to reach. Since the handle in its upright position is spring loaded and pulled against a mechanical stop there is no risk that the handle moves at the use of the keys. It is therefor quite natural for the operator to enter his code in this position and then to take the handle and start to use the truck.

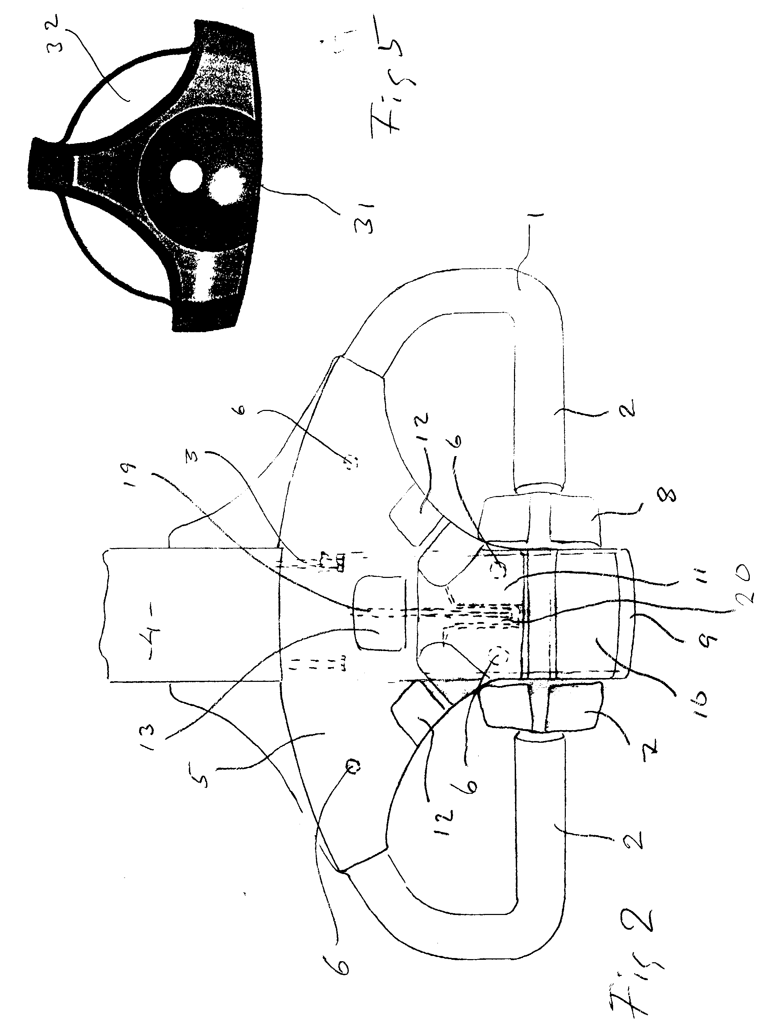

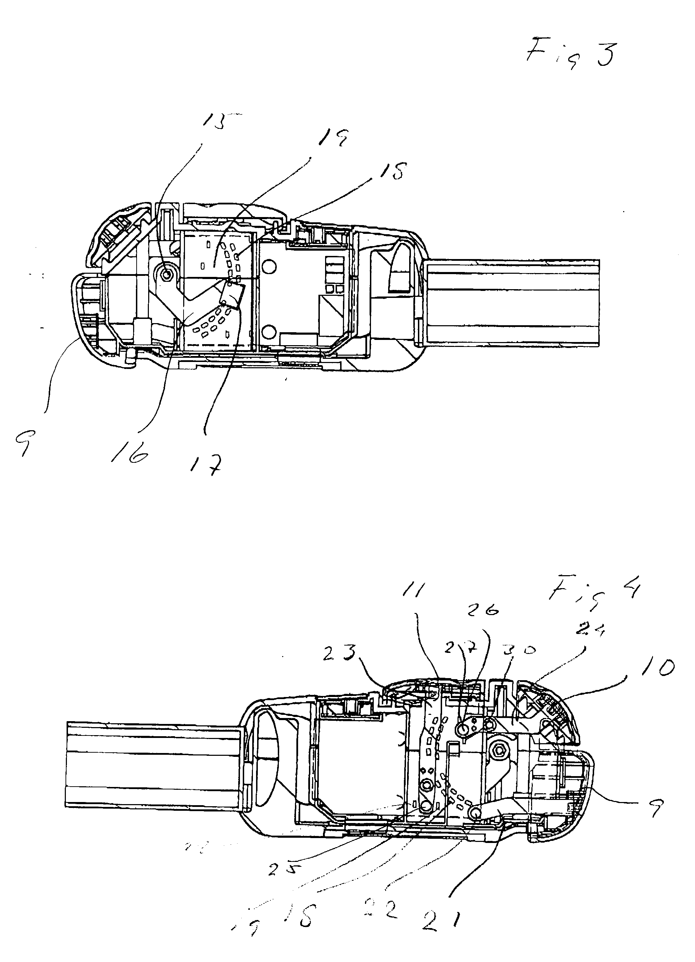

Additional advantages and characteristics of the invention are apparent from the following description of an embodiment shown in the enclosed drawings. In these fig. 1 shows a tiller truck in its entirety, fig 2 its handle seen from above, fig 3 and 4 vertical longitudinal sections through the handle and fig 5 one of the speed controls.

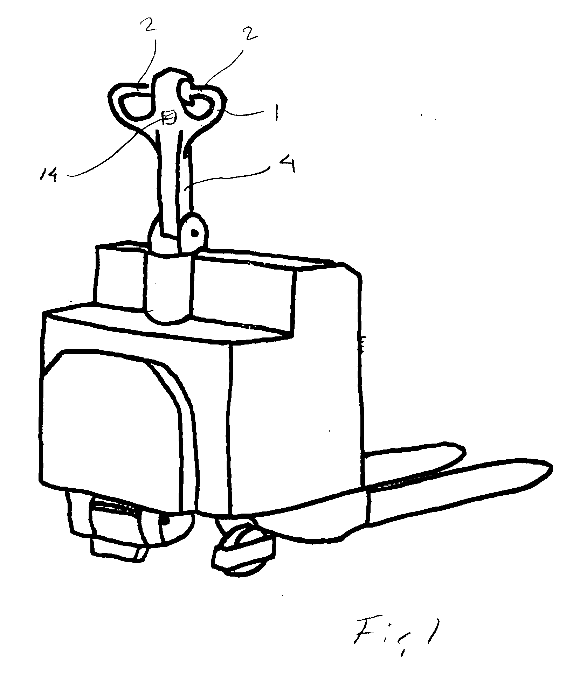

The tiller truck shown in fig 1 includes a drive and power unit from which the load forks project. In the drive and power unit the large batteries of the truck are arranged as well as a driving and steering wheel that is driven by a motor that is fed with electricity via a chopper that for instance provide currents in the shape of short pulses via tyristors. In the drive and power unit a hydraulic pump is provided with its electrically driven motor and hydraulic valves for the lifting movements. With the driving and steering wheel a tiller 4 is further connected, that is hinged height wise but pivotable together with the wheel in the drive and power unit for steering of the truck. In the outer end of the tiller a tiller handle is fastened and normally the operator leads the truck behind himself or steers it in front of himself.

The handle contains a supporting structure 1 provided with two grip handles 2 and is by means of bolts 3 fastened to the tiller 4 of the truck. On the frame 1 of the handle a control panel is fastened with four screws 6. The panel 5 is provided with drive controls 7 and 8 for left and right hand respectively for control of travel direction and speed by turning.

The control panel further includes a safety control or belly-button 9, a control 10 for lifting and lowering of the forks , a control 11 for lifting and lowering of the support legs and two buttons for the horn, one for the left and one for the right hand. On the top side the handle is further provided a display 13 and on the bottom side there is keyboard 14 for authority verification.

The drive controls 7 and 8 has the shape that is shown in fig 5 and differ from conventional drive controls by a downwards facing only slightly curved side 31. The operator can when he walks forwards with the truck following after him turn the palm of the hand upwards with the index finger in contact with the downwards facing only slightly curved side of the control, while the thumb may grip into the upper recess 32 turned towards the operator.In this way the ergonomics and the possibility of the operator to vary the manner in which the drive controls are actuated improve, so that the comfort is increased at the same time as the risk of wear damages is reduced.

The drive controls 8 and 7 for right and left hand respectively are connected to an axle 15 journaled in a lower bowl shaped part of the control panel 5. On the axle 15 an arm 16 is arranged provided with a magnet 17 in the outer end. At actuation of one of the drive controls 7 or 8 this magnet 17 is swung upwards or downwards from the neutral rest position dependent on desired direction of movement and speed respectively. The magnet that moves in a vertical plane at this sweeps along a curved double path of separate Hall sensors 18 arranged on a printed circuit 19. Via a serial cable 31 the printed circuit card is in contact with the drive and power unit of the truck. The printed circuit card is in the proximity of the speed control arranged in a narrow vertical receiving space or slot 20 in the bottom part of the housing and is in this way well protected, while the magnet moves on the outside of the slit wall, the magnet or any of the other moveable parts can thus not harm the Hall sensors or the printed circuit card even at greater play. The magnet field however has no difficulty in reaching through the walls of the receptacle and influence the Hall-elements. The Hall elements 18 serve as sensors or switches and the further forward (towards the truck) arranged logic is programmed so that it via the serial cable 31 and an electronically controlled chopper between battery and drive motor can control a successive increasing feed of more drive power at increased deflection of the drive control. The axle is further influenced by a spring device that when uninfluenced return the speed control to its 0-position. Since the Hall sensors 18 are arranged in double rows a large number of individual control levels are obtained (nine in each direction).

Through the used sensor technique the possibility is obtained to have many regulator steps at a low cost and it is easy to adapt the truck speed to the walking velocity of individual operators. In order to allow sufficient precision of the speed steps at low speed the steps are smaller at low speeds than those at the higher speeds. In order additionally to eliminate the feeling of jerkiness at the turning of the drive control the electronics is programmed to give a stepless increase, which is obtained by a successive and stepless increase to this value as the control is turned to the next step. By letting the rapidity in this successive and stepless increase be controlled by how swift the control movement is the sense of sluggishness that otherwise might be felt at increase is avoided. At a swift increase the ramping will be steep and no delay is felt and at a slow increase the ramping is slow so that the operator is not surprised by any sudden increase in velocity. This adaptive ramping may to its inclination be controlled by the time that passes between the activation of the different sensors at increase and decrease. Although this leads to a delay corresponding to the time between the reaction of these sensors this time is entirely negligible in relation to the slowness of the truck due to its weight.

As an alternative to the above use of Hall-elements for contact free control one can consider the use of photosensitive elements together with light guides or reflectors and light emitting diodes or some other light source.

The belly or security button has as its purpose to prevent the operator from being squeezed between the truck and a wall. Should this occur and the belly button is pushed in this is on an inwardly extending arm 21 provided with a magnet 22 that at this movement is moved so that it will influence one or several of the Hall elements that belong to the speed control, the magnet 22 however being located on the other side of the circuit card and its respective slot in relation to the magnet of the speed control. The magnet is as is apparent in level with the Hall-element that corresponds to the next fastest speed away from the operator, that is movement in the fork direction. The logic of the printed circuit card is at this programmed to activate an anti squeeze operation where the truck moves away from the operator until the button is released and has returned to its initial position.

The logic is further so programmed that if it detects a sensor fault that could mean that the sensor or sensors that are to react on a pushing of the belly-button might be non-functioning further use is blocked, or only allowed with limitations, as for instance that the truck can only be driven with a reduced speed and/or that the truck can not be driven towards the operator.

Also the controls located on top of the handle are provided with arms 23, 24 and magnets 25, 26 so that a tilting movement result in Hall-elements 27-30 being influenced initiating movements up and down for forks and support legs respectively.

For the above listed controls the use of Hall elements on the printed circuit card is particularly simple to arrange since the controls are located centrally in the handle in the same manner as the printed circuit card. If so desired one could consider also to arrange the signal controls with an extension and a magnet for a corresponding activation but in the shown case the signal controls are conventional electric contacts and connected by means of electric leads. Since the sensors belonging to the different movement controls are constituted by Hall elements sitting directly on the printed circuit card the possibility of electromagnetic pulses coming from the outside to interfere will become very small since the leads are short and centrally placed and also can be metal enclosed.

The slot or channel 20 receiving the printed circuit card 19 in the panel housing is narrow where the Hall sensors are situated to allow magnet influence for respective control but is widened in the end facing the truck. In this wider end the capsules containing the processors, memories etc are arranged, as well as the connections to the serial cable 31, keyboard and display.

The display 13 arranged on top of the control panel 5 is connected to the printed circuit card 19. The display is used at malfunction control and parameter setting without external means or additionally on the truck arranged means, but solely with the controls that the truck is normally provided with. In order to conduct an error control or parameter setting respectively one of the signal buttons is depressed at the same time as the truck is turned on via the authority verification described in more detail below alternatively with a key. This result in the logic of the truck entering into what we could call a check mode with all working functions inactive. An E is shown on the display corresponding to an Error log mode. A continued depressing result in the display of a P corresponding to parameter setting mode and a releasing of the signal button causes it to stay in the shown mode.

In the E-mode after a releasing of the signal button the latest error or malfunction that has been registered is displayed in the form of an error code alternating with the time (drive time) at which the error occurred. By means of the speed control one can then move back and forward in time with error codes and corresponding times being displayed. To get out of the error log mode the truck is turned off.

If by a somewhat longer depression of the signal button a P is shown on the display and the button is released at this the parameter setting mode has been entered and by actuation of the drive control corresponding to movement from or against the operator the display moves up or down in the list of parameters. When the parameter that is to be altered has been reached in this way the signal button is depressed resulting in the display of the parameter value, which can be altered up or down by means of the drive control. When the desired value has been reached this is confirmed by a depressing of the signal button, whereafter with the drive control the next parameter that is to be changed can be chosen. In order to exit the parameter setting mode the truck is turned off.

Examples of parameters etc that may be adjusted are allowed acceleration and retardation, height and load limitations, what one wants to receive warnings about, as battery voltage, load weight, height indication, if the indication is to be in kilograms, pounds, meters, feet etc.

The shift back from the error mode or parameter setting mode to drive mode is by turning the machine off. By not depressing any of the signal buttons at the starting the machine starts in drive mode with the possibly new parameter settings.

As is realized a possible change of the number of modes includes only changes in the electronics and a possible increase in the number of modes and check possibilities can thus be achieved with small costs, whether it is a question of further developments in production or refurnishing of a truck.

On the bottom side of the handle a keyboard is arranged for authority verification and starting and turning off of the truck instead of by means of a key. The keyboard is connected to the printed circuit card and arranged on the bottom of the housing of the control panel bottom part. The chassis of the handle is here provided with a corresponding recess so that the keys can be actuated. In this way the keyboard will at the same time be recessed and well protected by the sturdy chassis. The key board includes figure keys and a green key for start and a red key for stopping. If one wishes to enter Error log Mode, parameter setting mode or some other mode where the truck is inactivated one of the signal buttons is depressed at the same time as the green button is depressed or after entered authority verification code. The signal buttons are easy to reach even with the handle turned upward since they are located on the side of the control panel.

The keys of the keyboard may be provided with light emitting diodes that are lit when they have been depressed so that a receipt is obtained for the depressing, alternatively a row of light emitting diodes may be used as confirmation. The keys may be so called touch-keys or membrane keys.

The invention is not limited to the above embodiment but may be varied within the frame of the inventive thought.

## Claims

1. Device at a tiller truck, in particular a safety device, **characterized in** that it includes a keyboard (14) for authority verification arranged on the bottom side of the handle.

2. Device according to claim 1, **characterized in** that the keyboard is somewhat recessed into the handle so that it becomes better protected.

3. Device according to claim 1, **characterized in** that the key board is arranged in the proximity of a logic unit for the truck arranged in the handle.

4. Device according to any of the preceding claims, **characterized in** that the keys of the keyboard includes light emitting diodes for confirmation that key depression has taken place.

5. Device according to any of the preceding claims, **characterized in** that the keys are touch keys or membrane keys.

6. Device according to any of the preceding claims, **characterized in** that the keyboard includes start and stop keys.
